# FASCICULE DE BREVET EUROPEEN

(11) **EP 3 785 989 B1**
(45) Date de publication et mention de la délivrance du brevet: **06.12.2023**
(21) Numéro de dépôt: 20192229.1
(22) Date de dépôt: 21.08.2020
(51) Int. Cl.: F25D 11/00, F25D 23/06, B60P 3/20, B62D 33/04

(54) **CARROSSERIE FRIGORIFIQUE DE VÉHICULE ROUTIER DE TRANSPORT DE MARCHANDISES ÉQUIPÉE D'UNE CLOISON DE COMPARTIMENTAGE DÉPLAÇABLE**
KÜHLAUFBAU FÜR EIN STRASSENFAHRZEUG ZUM TRANSPORT VON GÜTERN MIT EINER VERSTELLBAREN TRENNWAND
REFRIGERATED BODY OF A ROAD VEHICLE FOR TRANSPORTING GOODS PROVIDED WITH A MOVABLE PARTITION WALL

(30) Priorité: 27.08.2019 FR 1909417
(43) Date de publication de la demande: 03.03.2021
(73) Titulaire: Jean Chereau SAS, 50220 Ducey (FR)
(72) Inventeur: LECUIR, Christophe, 50300 MARCEY LES GREVES (FR); RENOUF, Gildas, 50370 LE GRAND-CELLAND (FR)
(74) Mandataire: Casalonga

(56) Documents cités:
- EP-A1- 3 153 349
- FR-A3- 2 635 737
- US-A- 5 947 812
- US-A1- 2010 119 323
- US-A1- 2017 282 678

## Description

La présente invention concerne le domaine des carrosseries frigorifiques destinées à être montées par exemple sur les châssis de véhicules routiers de transport de marchandises tels que des camions, des semi-remorques ou des remorques ou des porteurs.

Plus particulièrement, la présente invention concerne une carrosserie frigorifique équipée d'une cloison de compartimentage.

L'espace de chargement intérieur de la carrosserie frigorifique est délimité par deux flancs verticaux opposés, un plancher, un plafond ou pavillon et une face avant. L'espace de chargement intérieur présente un accès arrière situé à l'opposé de la face avant et la carrosserie est munie d'un dispositif de fermeture de cet accès arrière. Ce dispositif de fermeture peut comprendre une porte à un ou plusieurs battants ou encore un rideau coulissant.

Une carrosserie frigorifique permet de transporter des marchandises ou des denrées périssables nécessitant d'être maintenues à une température constante, généralement inférieure à la température extérieure. Dans ce but, la carrosserie comprend un groupe ou machine frigorifique pour envoyer de l'air à température régulée à l'intérieur de l'espace de chargement.

Pour une carrosserie frigorifique, il peut être nécessaire de compartimenter l'espace de chargement compte tenu du volume important de cet espace. En outre, ceci permet de pouvoir disposer de plusieurs compartiments pouvant être maintenus à des températures différentes, par exemple pour le transport de différentes familles de marchandises. On parle alors généralement de fonctionnement « multi-températures » de la carrosserie frigorifique.

Pour réaliser ce compartimentage, il est généralement utilisé au moins une cloison articulée à rotation sous le pavillon de la carrosserie et mobile entre une position de stockage le long dudit pavillon et une position rabattue de séparation dans laquelle elle s'étend verticalement jusqu'au plancher. Pour plus de détail sur une telle cloison, on peut par exemple se référer à la demande EP 3 153 349.

Lors du chargement et du déchargement de la carrosserie, la ou les cloisons de compartimentage peuvent subir des chocs répétés en partie basse, notamment des chocs avec les palettes de marchandises ou encore avec les fourches du chariot élévateur utilisé.

Classiquement, afin de protéger la partie basse d'une cloison de compartimentage, il est fixé une plinthe de protection s'étendant transversalement le long de celle-ci. Cette plinthe de protection peut par exemple être réalisée en aluminium ou en matière synthétique.

Avec ce type de plinthe, les palettes de marchandises sont chargées en étant en appui contre celle-ci et contre la cloison. Ceci ne permet pas d'assurer une bonne circulation d'air dans le compartiment situé à l'arrière de la cloison.

La présente invention vise à remédier à cet inconvénient.

L'invention a pour objet une carrosserie frigorifique de véhicule routier de transport de marchandises comprenant :
- deux flancs verticaux, un pavillon et un plancher assemblés entre eux et délimitant en partie un espace de chargement intérieur,
- une machine frigorifique pour contrôler la température à l'intérieur dudit espace de chargement, et
- au moins une cloison de compartimentage s'étendant transversalement, mobile longitudinalement à l'intérieur de l'espace de chargement intérieur et déplaçable entre une position de rangement et une position d'utilisation pour le compartimentage de l'espace de chargement, ladite cloison de compartimentage comprenant une paroi de compartimentage et au moins une plinthe de protection fixée en partie inférieure de la paroi de compartimentage.

Les sens « transversal » et « longitudinal » sont utilisés en considérant le sens de la longueur de la carrosserie.

Selon une caractéristique générale, ladite plinthe de protection de ladite cloison de compartimentage est pourvue d'une embase de fixation fixée sur la paroi de compartimentage et s'étendant transversalement le long de ladite paroi, et d'au moins un butoir s'étendant en saillie par rapport à l'embase de fixation du côté opposé à la paroi de compartimentage.

Selon une autre caractéristique générale, ledit butoir s'étend sur une partie seulement de l'embase de fixation de sorte à laisser subsister au moins une zone verticale dépourvue de butoir. Ladite zone verticale s'étend à partir d'un bord supérieur de l'embase de fixation et étant située latéralement audit butoir.

La plinthe remplit une double fonction, à savoir de protection contre les chocs de la partie inférieure de la paroi de compartimentage de la cloison lors du chargement et du déchargement, et d'écarteur ou de distanceur des palettes de marchandises.

La fonction de protection contre les chocs est réalisée par l'embase de fixation et par le ou les butoirs.

La fonction de distanceur est assurée par le ou les butoirs. Ainsi, on garantit une bonne circulation d'air entre ladite plinthe de protection de la cloison de compartimentage et les marchandises supportées par les palettes, et donc une bonne ventilation de ces marchandises.

La profondeur dudit butoir est choisie selon la profondeur souhaitée pour le passage de circulation d'air délimité entre ladite plinthe de protection et les palettes de marchandises.

Par « butoir », on entend un organe délimitant au moins une surface de butée destinée à venir en appui contre des palettes de marchandises et/ou contre des marchandises lors du chargement de la carrosserie.

Avantageusement, l'embase de fixation de ladite plinthe de protection est pourvue d'une face intérieure en appui contre la paroi de compartimentage et d'une face extérieure opposée à la face intérieure. Ledit butoir s'étend en saillie par rapport à la face extérieure. Ladite zone verticale est délimitée au moins en partie par la face extérieure et par la zone de raccordement d'une face latérale dudit butoir à la face extérieure. Les faces intérieure et extérieure délimitent l'épaisseur de l'embase de fixation.

La face intérieure de l'embase de fixation peut être en appui direct contre la paroi de compartimentage, i.e. sans interposition d'élément intermédiaire, ou alternativement en appui indirect contre cette paroi.

Dans le cas d'un appui indirect avec interposition d'un élément entre l'embase et la paroi de compartimentage, cet élément peut par exemple être de la colle en cas de collage de la plinthe de protection sur la paroi de compartimentage. Indépendamment du type de fixation de l'embase, il est possible de prévoir un élément intermédiaire, par exemple rigide, entre celle-ci et la paroi de compartimentage.

La cloison de compartimentage peut comprendre en outre un levier de manipulation monté en partie inférieure de la paroi de compartimentage. Dans ce cas, ledit butoir de ladite plinthe de protection peut avantageusement s'étendre en saillie au-delà du levier de manipulation.

Avec un tel agencement, ledit butoir permet également de protéger contre les chocs le levier de manipulation lors du chargement et du déchargement.

Selon une disposition préférentielle, la distance séparant l'extrémité inférieure dudit butoir de ladite plinthe de protection du plancher de la carrosserie est inférieure à 70 mm, et de préférence inférieure à 45 mm.

Avec un tel agencement, on s'assure que les fourches d'un chariot élévateur utilisé pour le chargement et le déchargement ne puissent pas s'insérer sous ledit butoir.

De sorte à accroître la rigidité dudit butoir, il est possible de prévoir sur celui-ci une pluralité de nervures verticales.

Dans un mode de réalisation particulier, la cloison de compartimentage comprend en outre au moins un joint d'étanchéité monté à l'extrémité inférieure de la paroi de compartimentage. Dans ce cas, ladite plinthe de protection peut avantageusement recouvrir au moins en partie ledit joint d'étanchéité.

Ainsi, la plinthe de protection permet également de protéger contre les chocs le joint d'étanchéité inférieur, ce qui permet de limiter le risque de détérioration dudit joint lors du chargement et du déchargement, et de garantir une bonne isolation thermique entre les compartiments de la carrosserie frigorifique.

Selon une conception avantageuse, ladite plinthe de protection est réalisée monobloc. Ladite plinthe de protection peut par exemple être réalisée à faible coût par thermoformage. Alternativement, ladite plinthe de protection pourrait être réalisée selon d'autres procédés, par exemple par moulage ou encore par emboutissage.

Ladite plinthe de protection peut par exemple être réalisée en matière synthétique, notamment en PEHD (Polyéthylène Haute Densité) ou PP (Polypropylène). Alternativement, la plinthe de protection pourrait être réalisée dans d'autres matériaux, par exemple en aluminium.

Comme indiqué précédemment, ladite plinthe de protection est de préférence réalisée monobloc. Le ou les butoirs sont ainsi venus de matière avec l'embase de fixation. En variante, le ou les butoirs pourraient être réalisés sous forme d'éléments rapportés fixés sur l'embase par tout moyen approprié, par exemple par collage ou encore par surmoulage. Dans ce cas, le ou les butoirs et l'embase peuvent être réalisés dans des matériaux différents.

A titre indicatif, l'épaisseur de l'embase de fixation de la plinthe de protection peut être comprise entre 5 mm et 10 mm.

L'invention concerne également une cloison de compartimentage pour carrosserie frigorifique de véhicule routier de transport de marchandises comprenant une paroi de compartimentage et au moins une plinthe de protection fixée en partie inférieure de la paroi de compartimentage.

Ladite plinthe de protection est pourvue d'une embase de fixation fixée sur la paroi de compartimentage et s'étendant transversalement le long de ladite paroi, et d'au moins un butoir s'étendant en saillie par rapport à l'embase de fixation du côté opposé à la paroi de compartimentage, ledit butoir s'étendant sur une partie seulement de l'embase de fixation de sorte à laisser subsister au moins une zone verticale dépourvue de butoir, ladite zone verticale s'étendant à partir d'un bord supérieur de l'embase de fixation et étant située latéralement audit butoir.

La présente invention sera mieux comprise à la lecture de la description détaillée de modes de réalisation pris à titre d'exemples nullement limitatifs et illustrés par les dessins annexés sur lesquels :
[Fig 1]
[Fig 2] sont des vues en coupe longitudinale de l'intérieur d'une carrosserie frigorifique selon un exemple de réalisation de l'invention,
[Fig 3] est une vue en perspective partielle de la carrosserie des figures 1 et 2 illustrant une cloison de compartimentage de celle-ci,
[Fig 4] est une vue de détail de la figure 3,
[Fig 5] est une vue en perspective partielle de la carrosserie des figures 1 et 2 illustrant la cloison de compartimentage et une palette de marchandises,
[Fig 6] est une vue en coupe selon l'axe VI-VI de la figure 5,
[Fig 7] est une vue en coupe de la carrosserie sur laquelle est représentée une rangée de palettes de marchandises,
[Fig 8] et
[Fig 9] sont des vues en perspective illustrant une cloison de compartimentage d'une carrosserie frigorifique selon d'autres exemples de réalisation de l'invention.

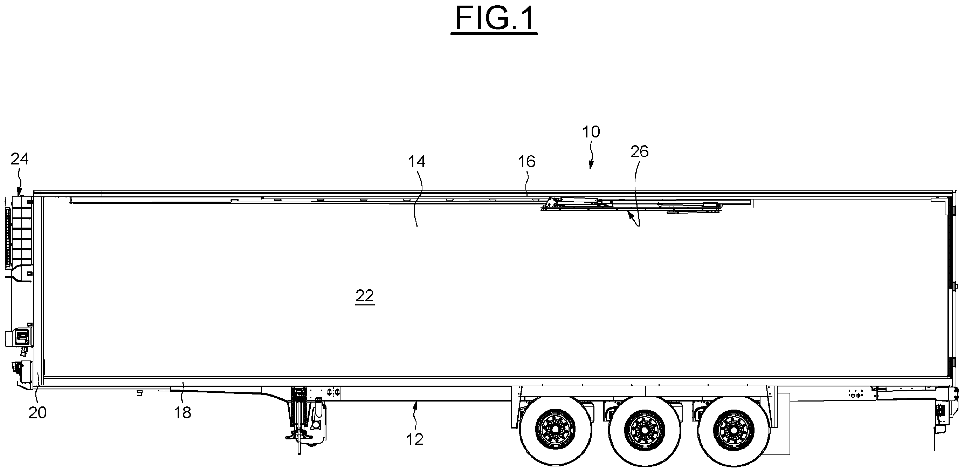

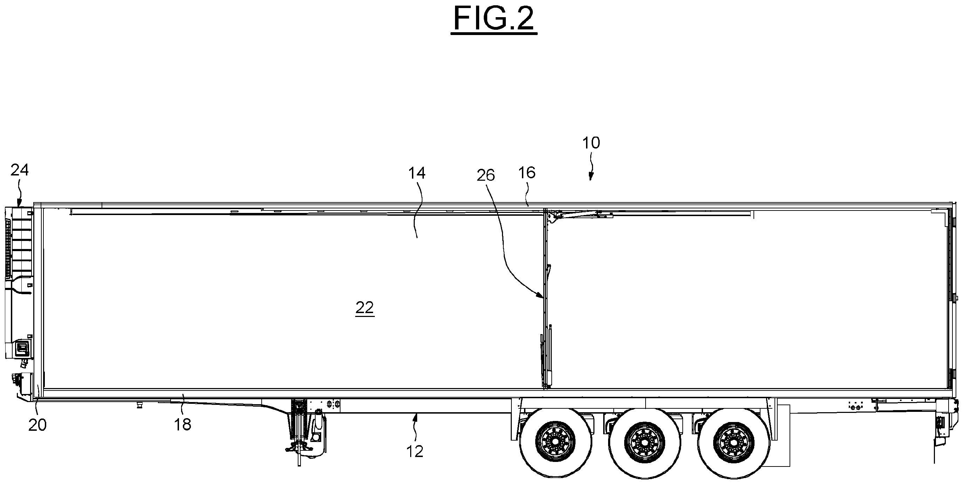

Sur les figures 1 et 2, on a représenté une carrosserie frigorifique, référencée 10 dans son ensemble, montée sur un châssis 12 porteur de véhicule de transport routier s'étendant longitudinalement et équipé de roues.

La carrosserie 10 comprend deux flancs 14 verticaux opposés s'étendant longitudinalement (un seul étant visible sur les figures), un plafond ou pavillon 16, un plancher 18, une face avant 20 et un cadre arrière nommé custode (non visible) qui sont assemblés entre eux pour délimiter un espace de chargement 22 intérieur.

De manière connue en soi, la carrosserie 10 comprend également un dispositif de fermeture (non référencé) d'une ouverture ou accès arrière à l'espace de chargement intérieur. Le dispositif peut être une porte à un ou deux battants articulés à rotation ou encore un rideau coulissant.

La carrosserie 10 comprend encore un groupe ou machine frigorifique 24 pour envoyer de l'air à température régulée à l'intérieur de l'espace de chargement 22. L'air est extrait de l'espace de chargement 22 par la machine frigorifique 24 et, après mise à température, réinjecté dans cet espace. La machine frigorifique 24 est fixée ici sur la face avant 20 de la carrosserie à l'extérieur de l'espace de chargement. En variante, il est possible de monter la machine frigorifique 24 sur une des autres parois de la carrosserie 10, par exemple sur le pavillon 16 ou sur le plancher 18.

La carrosserie 10 comprend une cloison 26 de compartimentage de l'espace de chargement 22 intérieur qui est prévue pour délimiter deux compartiments à l'intérieur dudit espace. De manière connue en soi, la machine frigorifique 24 comprend un circuit frigorifique équipé d'un évaporateur avant et d'un évaporateur arrière (non représentés) pour permettre la régulation de température de chacun des compartiments délimités par la cloison 26.

Comme cela sera décrit plus en détail par la suite, la cloison 26 de compartimentage est conçue pour être protégée contre les chocs au chargement et déchargement, et pour assurer une bonne circulation de l'air à l'intérieur de la carrosserie 10.

La cloison 26 est montée sur le pavillon 16. La cloison 26 est mobile à rotation entre une position relevée de stockage ou de rangement le long du pavillon 16 (figure 1) et une position abaissée de séparation (figure 2) dans laquelle deux compartiments sont délimités longitudinalement de part et d'autre de la cloison 26 à l'intérieur de l'espace de chargement 22. Dans l'exemple de réalisation illustré, la cloison 26 s'étend verticalement jusqu'au voisinage immédiat du plancher 18 dans la position abaissée d'utilisation. La cloison 26 s'étend transversalement entre les flancs 14. Dans l'exemple de réalisation illustré, la cloison 26 s'étend transversalement d'un flanc 14 à l'autre flanc 14 opposé.

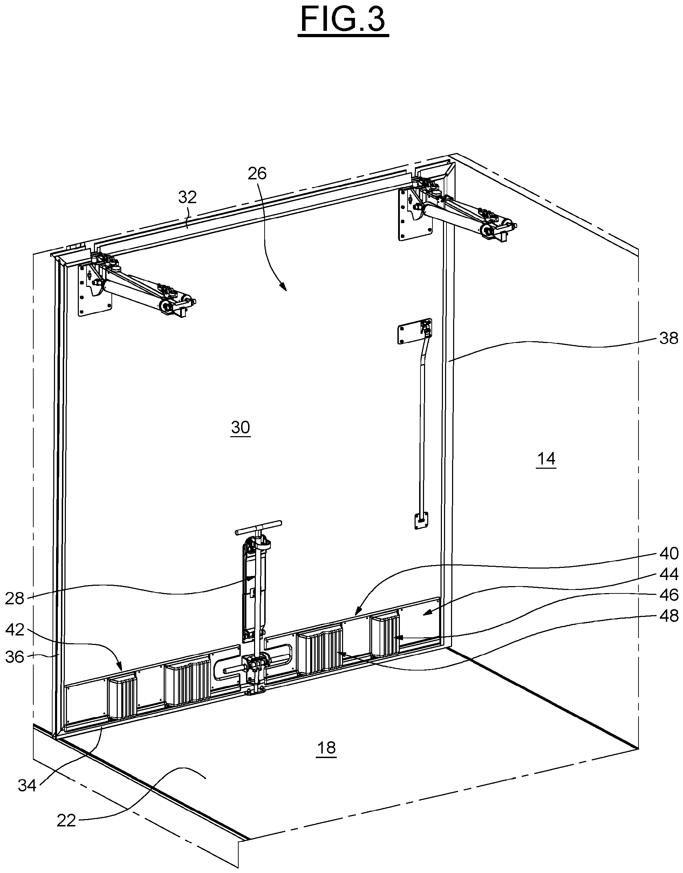

Comme illustré plus visiblement à la figure 3, un levier 28 de manipulation est fixé au voisinage de l'extrémité inférieure de la cloison 26. Le levier 28 est monté avec possibilité de rotation. Le levier 28 permet de pouvoir réaliser manuellement le passage de la cloison 26 de la position relevée de stockage vers la position abaissée, et inversement.

La cloison 26 est également montée coulissante à l'intérieur de l'espace de chargement 22 de sorte à pourvoir être positionnée dans ledit espace à la position longitudinale souhaitée. De manière connue en soi, pour assurer ce montage coulissant de la cloison, il est prévu deux rails de guidage (non visibles) fixés sur le pavillon 16 de la carrosserie, et deux chariots (non référencés) montés chacun de façon coulissante à l'intérieur d'un des rails et supportant la cloison 26. Les chariots permettent de positionner la cloison 26 dans l'espace de chargement 22 intérieur de la carrosserie à la position longitudinale souhaitée.

La cloison 26 comprend une paroi 30 pour assurer la fonction de séparation ou compartimentage de ladite cloison. La paroi 30 est pourvue d'une face avant et d'une face arrière opposée à ladite face avant dans le sens longitudinal. Les faces avant et arrière délimitent l'épaisseur de la paroi 30. Dans l'exemple de réalisation illustré, les faces avant et arrière sont planes. La paroi 30 est d'épaisseur constante. La paroi 30 est pleine.

La cloison 26 comprend également des joints 32 à 38 d'étanchéité montés sur le pourtour de la paroi 30 de compartimentage de sorte à former une ceinture périphérique d'étanchéité. Dans la position abaissée de la cloison 26, les joints 32 supérieur et 34 inférieur sont respectivement en appui contre le pavillon 16 et le plancher 18, et les joints 36, 38 sont en appui contre les flancs 14. Les joints d'étanchéité 32 à 38 peuvent par exemple être réalisés en matière synthétique souple, notamment en caoutchouc ou élastomère.

En pied de cloison 26, celle-ci est équipée en outre de deux plinthes 40, 42 de protection qui s'étendent chacune transversalement le long de la paroi 30. Les plinthes 40, 42 de protection sont distinctes de la paroi 30. Les plinthes 40, 42 de protection sont fixées sur la face arrière de la paroi 30. La partie de face arrière de la paroi 30 qui est dépourvue des plinthes 40, 42 de protection est lisse, i.e. dépourvue d'élément en saillie. Dans l'exemple de réalisation illustré, chaque plinthe 40, 42 est réalisée monobloc, i.e. en une seule pièce. Chaque plinthe 40, 42 est avantageusement réalisée par thermoformage, notamment en PEHD.

Les plinthes 40, 42 de protection recouvrent la partie basse ou inférieure de paroi 30. Les plinthes 40, 42 s'étendent sur la majeure partie de la largeur de la paroi 30. Les plinthes 40, 42 sont disposées transversalement de part et d'autre du levier 28.

Dans l'exemple de réalisation illustré, les plinthes 40, 42 de protection sont symétriques entre elles en considérant un plan médian vertical de la cloison 26 en position abaissée. Les deux plinthes 40, 42 de protection étant identiques, on décrira uniquement la plinthe 40.

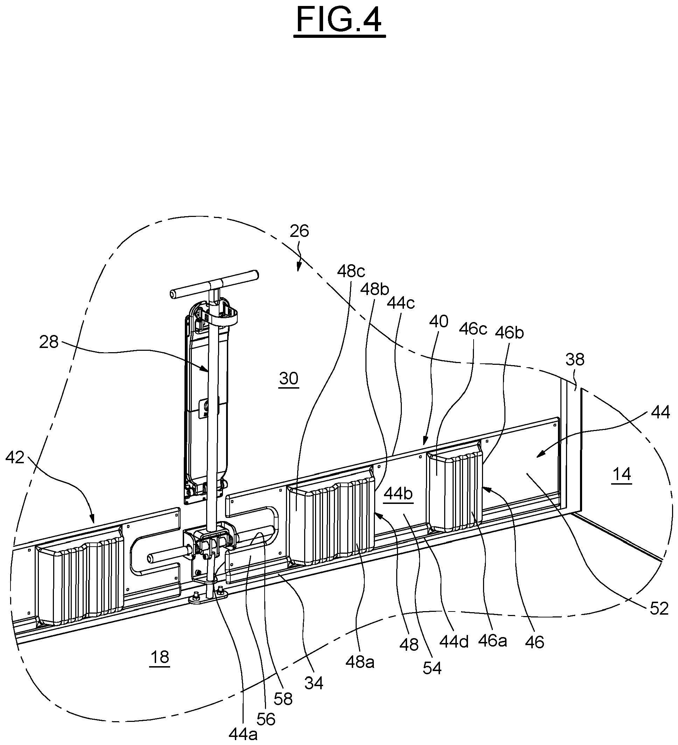

Comme cela est illustré plus visiblement à la figure 4, la plinthe 40 de protection est pourvue d'une embase 44 fixée sur la paroi 30, et deux butoirs 46, 48 faisant saillie par rapport à ladite embase. L'embase 44 s'étend transversalement le long de la paroi 30. Les butoirs 46, 48 s'étendent en saillie longitudinalement du côté opposé à la paroi 30.

La fixation de l'embase 44 de la plinthe de protection sur la paroi 30 est réalisée ici par rivetage. Alternativement ou en combinaison, il est possible de prévoir la fixation de l'embase 44 par tout autre moyen approprié, par exemple par collage, par vissage, etc.

L'embase 44 est pourvue d'une face intérieure 44a en appui contre la paroi 30 et d'une face extérieure 44b opposée à ladite face intérieure dans le sens longitudinal. Les faces intérieure 44a et extérieure 44b délimitent l'épaisseur de la plinthe 44 de protection. Dans l'exemple de réalisation illustré, les faces intérieure 44a et extérieure 44b sont planes.

L'embase 44 est également pourvue d'un bord supérieur 44c transversal et d'un bord inférieur 44d transversal opposé dans le sens vertical. Les faces intérieure 44a et extérieure 44b s'étendent du bord supérieur 44c au bord inférieur 44d.

Chaque butoir 46, 48 s'étend en saillie par rapport à la face extérieure 44b du côté opposé à la face intérieure 44a. Chaque butoir 46, 48 s'étend du côté opposé à la paroi 30, i.e. du côté du dispositif de fermeture de l'accès arrière à l'espace de chargement 22 intérieur. Comme indiqué précédemment, la plinthe 40 de protection est réalisée en une seule pièce. Ainsi, chaque butoir 46, 48 s'étend en saillie à partir de la face extérieure 44b.

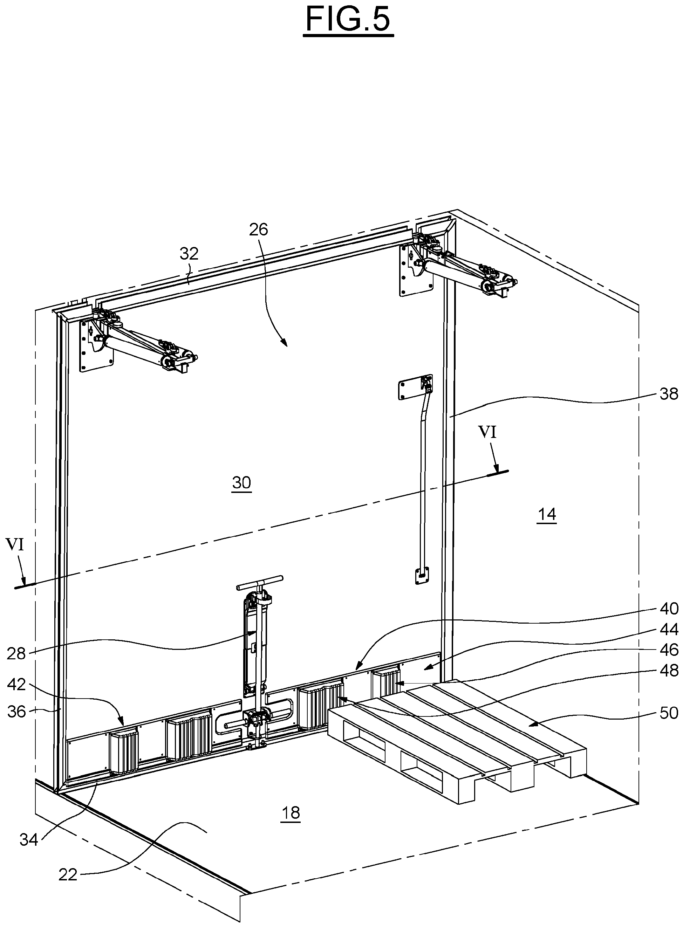

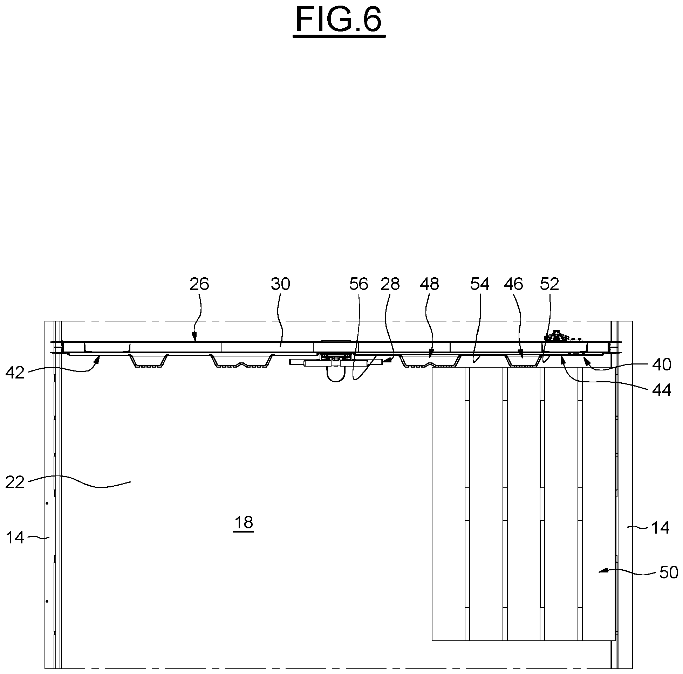

Chaque butoir 46, 48 présente une face frontale 46a, 48a extérieure qui forme une surface de butée pour une palette 50 (figures 5 et 6) destinée à supporter des marchandises. La face frontale 46a, 48a de chaque butoir est décalée longitudinalement par rapport à la face extérieure 44b de l'embase. Les faces frontales 46a, 48a des butoirs sont situées dans un même plan transversal vertical de la carrosserie. Autrement dit, les profondeurs longitudinales des butoirs 46, 46 sont égales.

Chaque butoir 46 présente également deux faces latérales 46b et 46c, 48b et 48c délimitant dans le sens transversal ledit butoir et reliant la face frontale 46a, 48a à la face extérieure 44b de l'embase. Dans l'exemple de réalisation illustré, les faces latérales des butoirs 46, 48 s'étendent verticalement.

Les butoirs 46, 48 s'étendent chacun localement sur l'embase 44 de sorte à laisser subsister sur celle-ci latéralement de part et d'autre desdits butoirs des zones 52, 54 et 56 dépourvues de butoir qui s'étendent verticalement. Dans l'exemple de réalisation illustré, ces zones résiduelles 52 à 56 laissées libres par les butoirs 46, 48 sont au nombre de trois. Les zones 52, 56 sont situées aux extrémités latérales de l'embase 44 et la zone 54 est située au centre de celle-ci. Chaque zone 52, 56 est délimitée par la face extérieure 44b de l'embase et par la zone de raccordement de la face latérale 46b, 48c du butoir 46, 48 à cette face extérieure. La zone 54 est délimitée par la face extérieure 44b de l'embase et par les zones de raccordement des faces latérales 46c et 48b des butoirs 46, 48 à cette face extérieure.

L'espacement dans le sens transversal entre les butoirs 46, 48 de la plinthe 40 de protection est choisie de sorte à être en face des plots de la palette 50 comme cela est illustré à la figure 5.

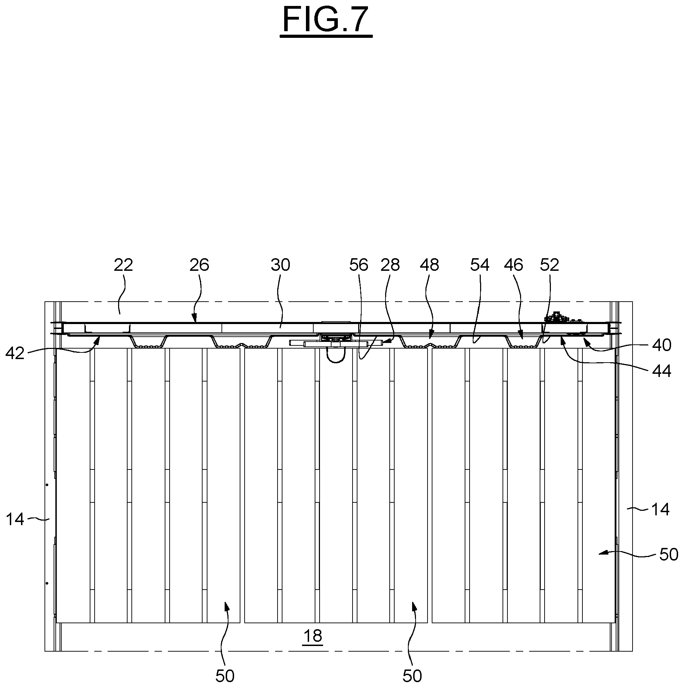

Dans l'exemple de réalisation illustré, la dimension transversale du butoir 48 est supérieure à celle du butoir 46. En effet, comme cela est illustré à la figure 7, le butoir 48 est prévu pour former une butée pour deux palettes 50 adjacentes d'une même rangée.

Lors du chargement de la carrosserie 10, les palettes 50 viennent en appui contre les butoirs 46, 48 de la plinthe de protection. Les zones 52 à 56 de l'embase de la plinthe de protection 40 restent à distances des palettes. Des espaces libres verticaux sont ainsi formés entre ces zones 52 à 56 de la plinthe et les palettes 50 adjacentes. Ces espaces libres verticaux forment des passages de circulation d'air permettant une bonne circulation d'air dans le sens vertical entre la cloison 26 et les palettes 50 de marchandises.

En outre, comme indiqué précédemment, les butoirs 46, 48 de la plinthe 40 sont en face des plots de la palette 50. Ceci permet d'optimiser la circulation d'air dans le sens longitudinal en-dessous des palettes 50 de marchandises.

Dans l'exemple de réalisation illustré, chaque butoir 46, 48 de la plinthe de protection 40 s'étend sur la majeure partie de la hauteur de l'embase 44. On s'assure ainsi d'obtenir une bonne circulation de l'air entre la cloison 26 et les palettes de marchandises même si les marchandises de la rangée de palettes 50 s'étendent en saillie par rapport à celles-ci en direction de la cloison. En effet, dans ce cas, les butoirs 46, 48 de la plinthe 40 forment aussi des butées pour les marchandises. En variante, il reste cependant envisageable de prévoir des butoirs 46, 48 présentant une hauteur limitée.

Dans l'exemple de réalisation illustré, chaque zone 52 à 56 de l'embase de la plinthe 40 s'étend du bord supérieur 44c au bord inférieur 44d de l'embase.

En variante, il pourrait être possible de prévoir qu'une ou plusieurs des zones 52 à 56 ne s'étendent que partiellement sur la face extérieure 44b à partir du bord supérieur 44c en direction du bord inférieur 44d mais sans atteindre ce bord inférieur. Ceci peut par exemple être le cas si les butoirs 46, 48 présentent d'autres formes, par exemple une forme en L. De sorte à obtenir une bonne ventilation des marchandises, il convient cependant de prévoir que les zones 52 à 56 s'étendent suffisamment bas en direction du bord inférieur 44d de l'embase de sorte qu'une partie de ces zones vienne toujours en regard des espaces ménagés entre les plots des palettes 50.

Dans l'exemple de réalisation illustré, chaque butoir 46, 48 de la plinthe 40 est pourvu d'une pluralité de nervures de rigidification verticales (non référencées) s'étendant sur la face frontale 46a, 48a. Alternativement, il reste possible de ne pas prévoir de telles nervures.

En se référant de nouveau à la figure 4, une échancrure 58 est ménagée à l'extrémité latérale de l'embase 44 de la plinthe, qui est située du côté du levier 28 de manipulation, pour entourer une partie de ce levier et protéger ainsi également la zone adjacente de la paroi à cette partie du levier.

Dans l'exemple de réalisation illustré, l'embase 44 de la plinthe s'étend en saillie au-delà de l'extrémité inférieure de la paroi et recouvre en partie le joint d'étanchéité 34 inférieur. Ainsi, on limite aussi le risque de détérioration du joint d'étanchéité 34 lors du chargement et déchargement de la carrosserie.

Dans cet exemple de réalisation, la carrosserie 10 comprend une unique cloison 26 pour créer deux compartiments distincts à l'intérieur de l'espace de chargement 22 intérieur.

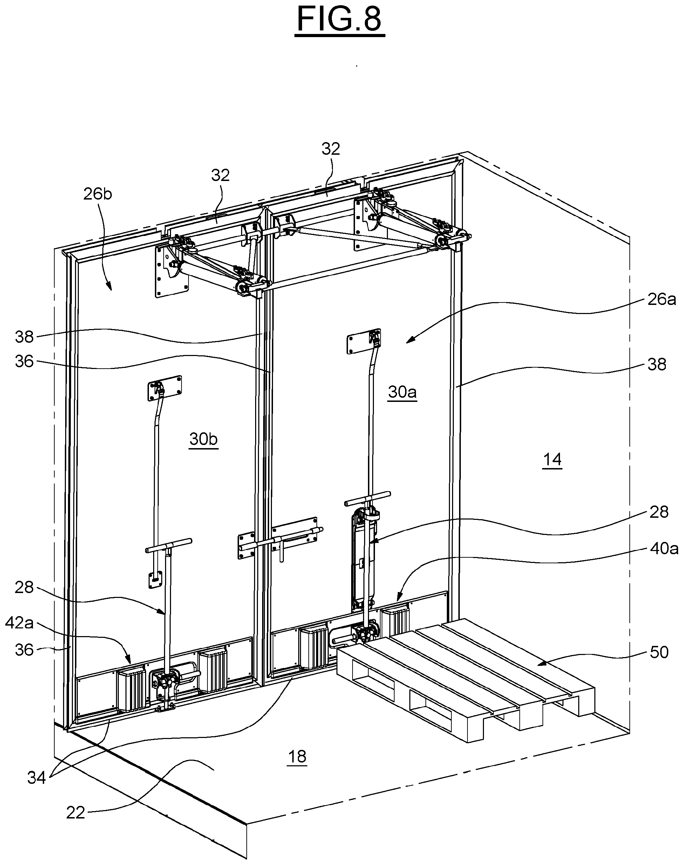

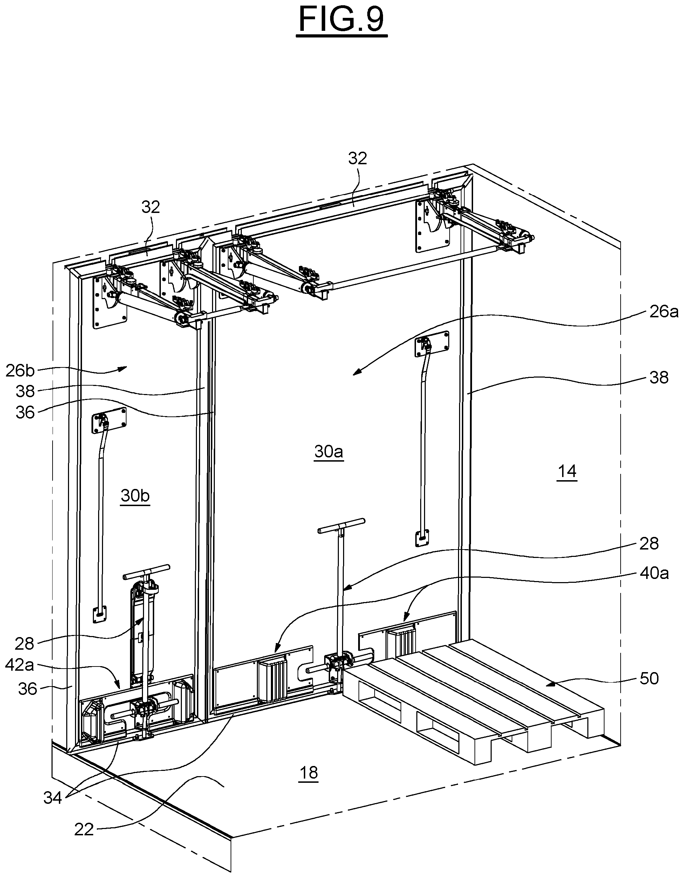

En variante, comme cela est illustré pour les deux exemples de réalisation des figures 8 et 9, la carrosserie 10 peut comprendre deux cloisons 26a, 26b transversales pour créer deux compartiments distincts à l'intérieur de l'espace de chargement 22 intérieur. Dans ces exemples, de façon identique au premier exemple de réalisation, chaque cloison 26a, 26b est montée coulissante à l'intérieur de l'espace de chargement 22, et mobile à rotation entre un état de rangement et un état d'utilisation.

De manière similaire au premier exemple de réalisation décrit, dans le deuxième exemple illustré à la figure 8, chaque cloison 26a, 26b est aussi équipée d'une plinthe 40a, 42a de protection équipée de deux butoirs du même type que ceux décrits précédemment. Dans le troisième exemple de réalisation illustré à la figure 9, la cloison 26a est aussi équipée de deux plinthes 40a de protection équipées chacune d'un seul butoir et la cloison 26b est équipée d'une plinthe 42a de protection équipée de deux butoirs.

L'invention a été illustrée à titre d'exemple sur la base d'une carrosserie de véhicule routier de transport du type semi-remorque. L'invention est aussi applicable à une carrosserie de véhicule routier de transport du type porteur, camion, ou remorque.

## Revendications

1. Carrosserie frigorifique de véhicule routier de transport de marchandises comprenant :
- deux flancs (14) verticaux, un pavillon (16) et un plancher (18) assemblés entre eux et délimitant en partie un espace de chargement (22) intérieur,
- une machine frigorifique (24) pour contrôler la température à l'intérieur dudit espace de chargement, et
- au moins une cloison de compartimentage (26) s'étendant transversalement, mobile longitudinalement à l'intérieur de l'espace de chargement (22) intérieur et déplaçable entre une position de rangement et une position d'utilisation pour le compartimentage de l'espace de chargement, ladite cloison de compartimentage (26) comprenant une paroi de compartimentage (30) et au moins une plinthe de protection (40) fixée en partie inférieure de la paroi de compartimentage, **caractérisée en ce que** ladite plinthe de protection (40) de ladite cloison de compartimentage est pourvue d'une embase de fixation (44) fixée sur la paroi de compartimentage (30) et s'étendant transversalement le long de ladite paroi, et d'au moins un butoir (46) s'étendant en saillie par rapport à l'embase de fixation (44) du côté opposé à la paroi de compartimentage (30), ledit butoir (46) s'étendant sur une partie seulement de l'embase de fixation de sorte à laisser subsister au moins une zone (52) verticale dépourvue de butoir, ladite zone (52) verticale s'étendant à partir d'un bord supérieur (44c) de l'embase de fixation et étant située latéralement audit butoir (46).

2. Carrosserie frigorifique selon la revendication 1, dans laquelle l'embase de fixation (44) de ladite plinthe de protection est pourvue d'une face intérieure (44a) en appui contre la paroi de compartimentage (30) et d'une face extérieure (44b) opposée par rapport à laquelle s'étend en saillie ledit butoir (46), ladite zone (50) verticale étant délimitée au moins en partie par la face extérieure (44b) et par la zone de raccordement d'une face latérale dudit butoir (46) à la face extérieure.

3. Carrosserie frigorifique selon la revendication 1 ou 2, dans laquelle ladite cloison de compartimentage (26) comprend en outre un levier de manipulation (28) monté en partie inférieure de la paroi de compartimentage (30), ledit butoir (46) de ladite plinthe de protection s'étendant en saillie au-delà du levier de manipulation (28).

4. Carrosserie frigorifique selon l'une quelconque des revendications précédentes, dans laquelle ledit butoir (46) de ladite plinthe de protection de ladite cloison de compartimentage est pourvu d'une pluralité de nervures verticales.

5. Carrosserie frigorifique selon l'une quelconque des revendications précédentes, dans laquelle ladite cloison de compartimentage (26) comprend en outre au moins un joint d'étanchéité (34) monté à l'extrémité inférieure de la paroi de compartimentage (30), ladite plinthe de protection (40) recouvrant au moins en partie ledit joint d'étanchéité (34).

6. Carrosserie frigorifique selon l'une quelconque des revendications précédentes, dans laquelle ladite plinthe de protection (40) ladite cloison de compartimentage est réalisée monobloc.

7. Carrosserie frigorifique selon l'une quelconque des revendications précédentes, dans laquelle ladite plinthe de protection (40) ladite cloison de compartimentage est réalisée par thermoformage.

8. Carrosserie frigorifique selon l'une quelconque des revendications précédentes, dans laquelle la distance séparant le plancher (18) de l'extrémité inférieure dudit butoir (46) de ladite plinthe de protection de la cloison de compartimentage (26) est inférieure à 70 mm, et de préférence inférieure à 45 mm.

## Patentansprüche

1. Kühlkarosserie eines Straßenfahrzeugs zur Güterbeförderung, die Folgendes umfasst:
- zwei vertikale Seitenwände (14), ein Dach (16) und einen Boden (18), die miteinander verbunden sind und teilweise einen inneren Laderaum (22) begrenzen,
- eine Kühlmaschine (24) zum Steuern der Temperatur im Inneren des Laderaums, und
- mindestens eine sich quer erstreckende Unterteilungstrennwand (26), die innerhalb des inneren Laderaums (22) in Längsrichtung beweglich und zwischen einer Verstauposition und einer Gebrauchsposition zur Unterteilung des Laderaums verschiebbar ist, wobei die Unterteilungstrennwand (26) eine Unterteilungswandung (30) und mindestens eine Schutzleiste (40) umfasst, die im unteren Teil der Unterteilungstrennwand befestigt ist, **dadurch gekennzeichnet, dass** die Schutzleiste (40) der Unterteilungstrennwand mit einer Befestigungsbasis (44), die an der Unterteilungswandung (30) befestigt ist und sich quer entlang der Wandung erstreckt, und mindestens einen Anschlag (46) versehen ist, der in Bezug auf die Befestigungsbasis (44) auf der der Unterteilungswandung (30) gegenüberliegenden Seite vorsteht, wobei sich der Anschlag (46) nur über einen Teil der Befestigungsbasis erstreckt, so dass mindestens ein vertikaler Bereich (52) ohne den Anschlag verbleibt, wobei sich der vertikale Bereich (52) von einer Oberkante (44c) der Befestigungsbasis erstreckt und sich seitlich des Anschlags (46) befindet.

2. Kühlkarosserie nach Anspruch 1, wobei die Befestigungsbasis (44) der Schutzleiste mit einer Innenfläche (44a), die an der Unterteilungswandung (30) anliegt, und einer gegenüberliegenden Außenfläche (44b) versehen ist, in Bezug auf die sich der Anschlag (46) vorstehend erstreckt, wobei der vertikale Bereich (50) zumindest teilweise durch die Außenfläche (44b) und durch den Verbindungsbereich einer Seitenfläche des Anschlags (46) mit der Außenfläche begrenzt wird.

3. Kühlkarosserie nach Anspruch 1 oder 2, wobei die Unterteilungstrennwand (26) ferner einen Betätigungshebel (28) umfasst, der im unteren Teil der Unterteilungswandung (30) angebracht ist, wobei der Anschlag (46) der Schutzleiste sich vorstehend über den Betätigungshebel (28) hinaus erstreckt.

4. Kühlkarosserie nach einem der vorhergehenden Ansprüche, wobei der Anschlag (46) der Schutzleiste der Unterteilungstrennwand mit einer Vielzahl von vertikalen Rippen versehen ist.

5. Kühlkarosserie nach einem der vorhergehenden Ansprüche, wobei die Unterteilungstrennwand (26) ferner mindestens eine Dichtung (34) umfasst, die am unteren Ende der Unterteilungswandung (30) angebracht ist, wobei die Schutzleiste (40) die Dichtung (34) zumindest teilweise abdeckt.

6. Kühlkarosserie nach einem der vorhergehenden Ansprüche, wobei die Schutzleiste (40) und die Unterteilungstrennwand aus einem Stück hergestellt sind.

7. Kühlkarosserie nach einem der vorhergehenden Ansprüche, wobei die Schutzleiste (40) und die Unterteilungstrennwand durch Thermoformen hergestellt sind.

8. Kühlkarosserie nach einem der vorhergehenden Ansprüche, wobei der Abstand, der den Boden (18) des unteren Endes des Anschlags (46) der Schutzleiste von der Unterteilungstrennwand (26) trennt, weniger als 70 mm und vorzugsweise weniger als 45 mm beträgt.

## Claims

1. A refrigerating body of a road vehicle for transporting goods comprising:
- two vertical side panels (14), a roof (16) and a floor (18) assembled to one another and partly delimiting an internal loading space (22),
- a refrigerating machine (24) to control the temperature inside said loading space, and
- at least one partition bulkhead (26) extending transversely, movable longitudinally inside the internal loading space (22) and displaceable between a storage position and a use position for partitioning the loading space, said partition bulkhead (26) comprising a partition wall (30) and at least one protective skirting board (40) attached to a lower part of the partition wall, **characterised in that** said protective skirting board (40) of said partition bulkhead is provided with an attachment base (44) attached to the partition wall (30) and extending transversely along said wall, and with at least one stopper (46) extending protruding relative to the attachment base (44) on the opposite side to the partition wall (30), said stopper (46) extending over part only of the attachment base so as to leave at least one vertical zone (52) devoid of a stopper, said vertical zone (52) extending from an upper edge (44c) of the attachment base and being located laterally to said stopper (46).

2. The refrigerating body according to claim 1, wherein the attachment base (44) of said protective skirting board is provided with an internal face (44a) bearing against the partition wall (30) and with an opposite external face (44b) relative to which said stopper (46) extends protruding, said vertical zone (50) being at least partly delimited by the external face (44b) and by the zone for connecting a side face of said stopper (46) to the external face.

3. The refrigerating body according to claim 1 or 2, wherein said partition bulkhead (26) further comprises a handling lever (28) mounted to the lower part of the partition wall (30), said stopper (46) of said protective skirting board extending protruding beyond the handling lever (28).

4. The refrigerating body according to any of the preceding claims, wherein said stopper (46) of said protective skirting board of said partition bulkhead is provided with a plurality of vertical ribs.

5. The refrigerating body according to any of the preceding claims, wherein said partition bulkhead (26) further comprises at least one seal (34) mounted to the lower end of the partition wall (30), said protective skirting board (40) at least partly covering said seal (34).

6. The refrigerating body according to any of the preceding claims, wherein said protective skirting board (40) of said partition bulkhead is made as one-piece.

7. The refrigerating body according to any of the preceding claims, wherein said protective skirting board (40) of said partition bulkhead is made by thermoforming.

8. The refrigerating body according to any of the preceding claims, wherein the distance between the floor (18) and the lower end of said stopper (46) of said protective skirting board of the partition bulkhead (26) is less than 70 mm, and preferably less than 45 mm.
